# EUROPEAN PATENT SPECIFICATION

(11) **EP 2 910 811 B1**
(45) Date of publication and mention of the grant of the patent: **26.06.2019**
(21) Application number: 13881752.3
(22) Date of filing: 10.04.2013
(51) Int. Cl.: F16F 9/49

(54) **HYDRAULIC SHOCK ABSORBER FOR SUSPENSION SYSTEM AND CORRESPONDING IMPROVED HYDRAULIC STOP**
HYDRAULISCHER STOSSDÄMPFER FÜR AUFHÄNGUNGSSYSTEM UND VERBESSERTER ENTSPRECHENDES HYDRAULISCHER ANSCHLAG
AMORTISSEUR HYDRAULIQUE POUR SUSPENSION ET BUTÉE HYDRAULIQUE AMÉLIORÉE

(43) Date of publication of application: 26.08.2015
(73) Proprietor: Magneti Marelli Cofap Fabricadora de Peças Ltda., CEP: 09110901 Santo André-SP (BR)
(72) Inventor: SOROMENHO, Geraldo Bontempi, CEP: 09185-450 Santo André-SP (BR)
(74) Representative: Corradini, Corrado
(86) International application number: PCT/BR2013/000114
(87) International publication number: WO 2014/165951

(56) References cited:
- BR-A- 8 806 750
- BR-A- 8 806 915
- BR-A- 8 905 410
- DE-A1- 2 853 914
- DE-A1- 3 010 690
- DE-A1-102004 039 702

## Description

The present invention relates to an improvement applied to a hydraulic shock absorber for the suspension of a vehicle, such as that used for absorbing shocks in suspensions of motor vehicles and the like. More particularly, the present invention relates to an improved hydraulic shock absorber comprising an improved hydraulic stop and a corresponding improved hydraulic stop.

### Background of the Invention

Shock absorbers for vehicles suspension basically consist of a telescopic device having a reciprocating rod mounted along an inner cylinder in a shell, said device having externally an end attachable in the structure of the vehicle and one opposite end attachable in one of the suspension arms of the vehicle.

The fluid communication between the cylinder and the shell takes place through at least one fluid passage valve, which is mounted adjacent to one of the ends of the cylinder, when the reciprocating movement of the rod is caused by the movement of the vehicle suspension in relation to the body of said vehicle. This movement occurs against a resistance force to the movement resulting from the passage of the viscous fluid through said valve.

The set of shell/cylinder has, at one end, a through-opening whereby the reciprocating rod displaces during its movement. This end is provided with an annular sealing member, which acts as a guide for the reciprocating rod and as a sealing of the leakage of the viscous fluid of the shock absorber.

The damping characteristics of the conventional shock absorbers are defined based on the existing valves in the piston and on the streaming valves of the viscous fluid between the cylinder and the shell, regardless of the rod position in its telescopic movement, which is limited, in the motor vehicles suspensions, by a mechanical limiter which acts to limit the maximum distention of the rod.

In a first known solution in the art, said mechanical limiter comprises a mechanical, stop attached to a portion of the reciprocating rod, internally of the inner cylinder, and, therefore, an elastomeric annular member. In a fully extended condition of said reciprocating rod, the said inner annular member contacts an annular stop member provided adjacent to the through-opening of said rod. In this embodiment, the limiter member does not slide along the inner side wall of the cylinder.

During the extension movement of the reciprocating rod, the braking performance of the viscous fluid, provided between the mechanical limiter and the stop member, does not prevent, when it reaches to the maximum telescopic distension position, that a shock occurs between the limiter and the stop, which causes abrupt movements of the suspension, which are transmitted to the passengers and/or to the carried cargo.

In another known solution in the art, the hydraulic shock absorbers use hydraulic stops provided on the reciprocating rod, such as the mechanical limiters described above. Said hydraulic stops are provided of elastic rings supported by springs or sliding attachments in said reciprocating rod or inner cylinder. The retention of viscous fluid in these hydraulic stops is better than that in the shock absorbers with piston, when the reciprocating rod approaches to the maximum telescopic distention position, resulting in a greater damping force at a position near from distention.

Finally, it is also known in the art the solution proposed in the Brazilian Patent 9401784, co-owned by the present applicant, in which is disclosed a shock absorber for the suspension of a vehicle, which includes a tubular shell, a tubular body and a reciprocating rod provided with a piston and a stroke limiter member. In particular, the tubular body has, in an axial extension of its inner wall, a diametrical reduction, so as to allow, during the movement of the reciprocating rod, the contact of at least a portion of the circumferential extent of the stroke limiter member with the inner wall of the tubular body, and wherein at least one of the portions defined by the inner wall of the tubular body and stroke limiter member is provided with axial flow channels for the outflow of the viscous fluid during the movement of said reciprocating rod.

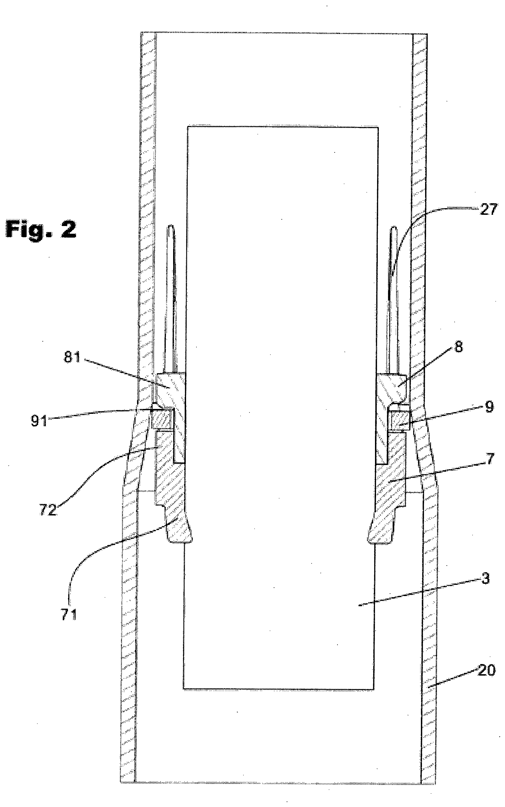

Particularly with regard to the stroke limiter member, it is defined as a elastomeric stroke limiter member in the form of a split ring carrying an elastomeric annular element, said stroke limiter being axially attached to the reciprocating rod through the retaining rings arranged in the respective grooves of said reciprocating rod (see figure 2 of Brazilian patent 9401784).

Notwithstanding the progress achieved by the above described solution, it is not free from drawbacks. In particular, the great number of parts that compound said stroke limiter member (five parts) and the particular configurations of said parts have been showed to be an obstacle for an automated assembling system thereof. For some time the applicant has been conducting research in order to get an automated equipment for the automatic and sequential assembly of the five parts that compose the stroke limiter, but without success. Despite tests have been carried out both changing the mounting direction of the parts and changing the assembly sequence of said component parts, it was not possible to achieve a combination that could provide an automated and sequential assembly of the stroke limiter.

Document DE102004039702 discloses an hydraulic stop comprising a stroke limiter mounted on the reciprocating rod of a shock absorber.

Moreover, due to the particular geometry of the component parts of said stroke limiter as well as the inherent gaps in a set so formed, has been found, in practice, an eventual noise provoked by the parts swinging; such a noise affects the driver and passengers comfort in the vehicle wherein said shock absorber is mounted.

### Objects of the invention

It is a first object of the present invention an improved hydraulic stop, which can be mounted on the reciprocating rod of a vehicle shock absorber and its assembly can be performed in an automated and sequential form by means of an automated assembly equipment.

It is another object of the present invention an improved hydraulic stop with reduced gaps between their component parts, so as to knock out, or at least to substantially reduce, the noise due to relative motion of the component parts of said hydraulic stop during the practical use of a shock absorber for vehicles in general having a hydraulic stop.

Finally, it is a further object of the present invention a shock absorber for vehicles suspension in general, including a hydraulic stop with reduced swinging and that can be automatically mounted on the reciprocating rod of said shock absorber.

### Summary of the invention

These and other objectives are achieved, in accordance with the present invention, from a shock absorber for suspension system comprising: a tubular shell containing viscous fluid and having closed ends; a tubular body mounted inside and concentric to said tubular shell and having a closed end adjacent to one of the closed ends of the tubular shell, and an opposite end provided with a central opening passing through the adjacent opposite end of the tubular shell; and an axially movable reciprocating rod disposed through said central opening of the tubular body and provided with a sliding piston inside the tubular body and provided with an annular elastomeric stroke limiter member, said reciprocating rod moving between a retracted position, wherein said piston is adjacent to the closed end of the tubular body, and an extended position in which said stroke limiter member is adjacent to said central opening; wherein the tubular body has, in an axial extension of its inner wall adjacent to the open end, a diametrical reduction to allow, during the movement of the reciprocating rod, the contact at least of a portion of the circumferential extension of the stroke limiter member with the inner wall of the tubular body, and wherein at least one of the portions defined by the inner wall of the tubular body and stroke limiter member is provided with axial flow channels for the outflow of the viscous fluid during the movement of said reciprocating rod. The stroke limiter member comprises a retaining ring, a locking ring and a sealing ring, said retaining ring partially enclosing said locking ring and defining, together with said locking ring, a groove able to receive said sealing ring.

More particularly, the retaining ring comprises an annular body having a lower annular projection and an upper annular projection, said projections being diametrically opposed to one another, and said lower annular projection being elastic and shaped, so as to enter to the recess of the reciprocating rod when the retaining ring is in its assembled condition, and wherein said upper annular projection is disposed far from the cylindrical surface of the reciprocating rod, thereby defining an annular pocket between the upper annular projection of the retaining ring and said cylindrical surface of the reciprocating rod. In addition, the locking ring comprises a body shaped as a low profile sleeve having a first end able to enter inside said annular pocket, and a second end axially opposite to the first end, provided with an outward radial projection.

### Brief descriptions of the drawings

The invention will be better understood from the following detailed description, in regard to a preferred and non-limiting embodiment of the invention, based on merely illustrative attached drawings, in which:
- Figure 1 is a perspective exploded view of the hydraulic stop of the present invention and part of a stroke absorber;
- Figure 2 is a cross-sectional view of part of a shock absorber incorporating the hydraulic stop of the invention; and
- Figure 3 is a cross-sectional view, similar to Figure 2, of an alternative embodiment of the invention.

### Preferred embodiment of the invention

According to the attached figures, the numerical (1) indicates a shock absorber for suspension system, such as described and illustrated in the Brazilian patent number 9401784, which is herein entirely incorporated as reference, and which basically comprises:
- a tubular shell (not shown) containing viscous fluid and having closed ends (not shown);
- a tubular body (20) mounted inside and concentric to said tubular shell and having one closed end (not shown), adjacent to one of the closed ends of the tubular shell, and an opposite end (not shown) provided with a central opening (not shown) passing through the adjacent opposite end of the tubular shell; and
- an axially movable reciprocating rod disposed through said central opening of the tubular body (20) and provided with a piston (not shown) sliding within the tubular body and provided with an annular elastomeric stroke limiter, said reciprocating rod movable between a retracted position, in which said piston is adjacent to the closed end of the tubular body (20), and an extended position, in which said stroke limiter member is adjacent to said central opening.

In particular, the tubular body (20) has, in an axial extension of its inner wall adjacent to the open end (not shown), a diametrical reduction (26), so as to allow, during displacement of the reciprocating rod, the contact, at least, of part of the circumferential extension of the stroke limiter member with the inner wall of the tubular body (20), and wherein at least one of the portions defined by the inner wall of the tubular body (20) and stroke limiter member is provided with axial flow channels (27) for the outflow of the viscous fluid during the movement of said reciprocating rod (30).

According to the present invention, the shock absorber (1) comprises a reciprocating rod (3) in the radial periphery where is fixed an annular elastomeric stroke limiter member (6) designed to mechanically interfere with the inner wall of the tubular body (20).

More specifically, said reciprocating rod (3) has, on the radial periphery of its outer lateral surface, a conical recess (4) of cross section in the shape of right triangle. Preferably, said recess (4) is obtained by means of the rolling process of the reciprocating rod (3); notwithstanding other production methods can be equally used.

Also, according to the present invention and with particular attention to Figure 2, the stroke limiter member (6) comprises a retaining ring (7), a locking ring (8) and a sealing ring (9).

The retaining ring (7) placed at a lower location, according to the position shown in Figure 2, is displayed as an annular body having a lower annular projection (71) and an upper annular projection (72).

Said lower annular projection (71) is elastic and shaped so as to enter into said recess (4) of the reciprocating rod (3), when the retaining ring (7) is in its assembled condition (as in figure 2). Thereby, the retaining ring (7) can not move beyond the area bounded by the recess (4), even due to the friction between the sealing ring (9) and the inner wall of the tubular body (20).

Said upper annular projection (72) is diametrically opposite to the lower annular projection (71) and it is located far from the cylindrical surface of the reciprocating rod (3). Therefore, an annular pocket is defined between the upper annular projection (72) of the retaining ring (7) and said cylindrical surface of the reciprocating rod (3).

The locking ring (8) has the shape of a low profile sleeve able to slide, with clearance space, over the cylindrical surface of the reciprocating rod (3). On its upper side (also relative to the position shown in Figure 2), said locking ring (8) has an outward radial projection (81). In other words, the locking ring (8) comprises a first end able to enter into the annular pocket and a second end, axially opposite to the first end, provided with an outward radial projection (81).

In the mounted condition of the stroke limiter member (6), the retaining ring (7) is penetrated by the locking ring (8). Specifically, a portion of the body of the locking ring (8) enters into the annular pocket defined between the cylindrical surface of the reciprocating rod (3) and annular projection (72) of the retaining ring (7), so that only a portion of the retaining ring (7) fully fill said annular pocket. In this way, between the radial projection (81) of the locking ring (8) and the upper annular projection (72) of the retaining ring (7) is defined a groove (91) with quadrangular cross-section, able to receive, with clearance space in the axial direction, the sealing ring (9).

In the performed practical trials, it was observed that the solution of the present invention satisfies the technical and regulatory requirements relating to this kind of shock absorber. Even more, especially due to mechanical interferences between the retaining ring (7) and locking ring (8) against the cylindrical surface of the reciprocating rod (3), as well as the absence of the pair of retaining rings disclosed in the Brazilian patent 9401784, were not detected noises during the use of a shock absorber for suspension system, comprising a stroke limiter member (6), according to the invention.

Moreover, the solution herein proposed allows that the said stroke limiter member (6), and, in particular, its three component parts are mounted automatically on the reciprocating rod (3), avoiding eventual assembly errors and provide cost and time reductions in the production of such shock absorber.

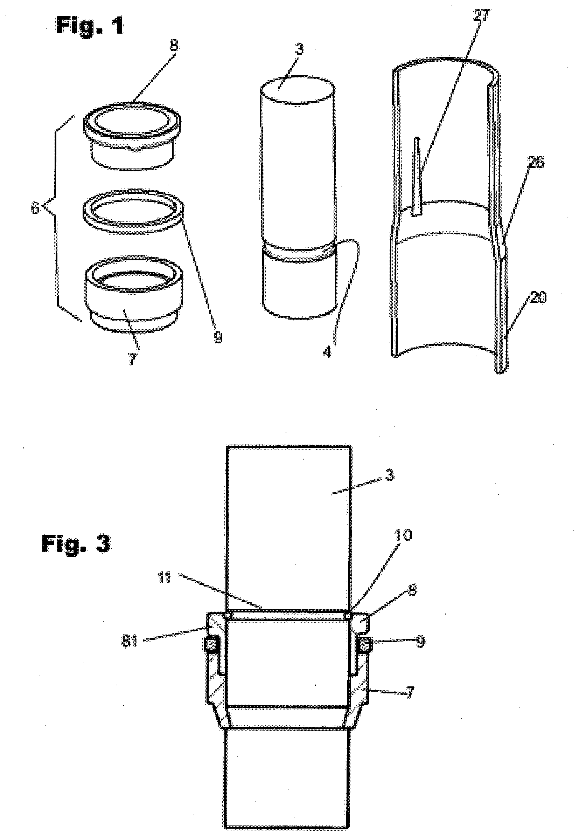

In an alternative embodiment of the present invention, as illustrated in Figure 3, the stroke limiter (6) is locked on its upper side by means of a retaining ring (10), which is inserted into the channel (11), formed on the outer surface of the reciprocating rod (3).

In particular, said channel (11) is formed, for example, during the recess (4) rolling process, or possibly just after thereof, also by means of a rolling process. After the automated insertion of the stroke limiter (6), is provided the insertion, also automated, of said retaining ring (10) to its final position inside the channel (11).

Said retaining ring (10) is a special safeguard, since, in normal working conditions, there is not a trend of an upward displacement of the stroke limiter (6) (relative to the position shown in Figures 1-3).

## Claims

1. Hydraulic stop, comprising a stroke limiter member (6) mounted on the reciprocating rod (3) of a shock absorber (1), with the purpose to control the flow of a viscous fluid by means of mechanical interaction between the stroke limiter member (6) and the cylindrical inner wall of the shell (20) of the shock absorber (1), wherein the stroke limiter member (6) comprises a retaining ring (7), a locking ring (8) and a sealing ring (9), the retaining ring (7) partially enclosing the locking ring (8) and defining, together with the locking ring (8), a groove (91) able to receiving the one sealing ring (9), **characterized in that** the retaining ring (7) comprises an annular body having a lower annular projection (71) and an upper annular projection (72), the projections (71, 72) being diametrically opposed to one another, and wherein the lower annular projection (71) is elastic and shaped to enter into the recess (4) of the reciprocating rod (3) when the retaining ring (7) is in its assembled condition, and wherein the upper annular projection (72) is located far from the cylindrical surface of the reciprocating rod (3), thereby defining an annular pocket between the upper annular projection (72) of the retaining ring (7) and the cylindrical surface of the reciprocating rod (3).

2. Hydraulic stop according to claim 1, wherein the locking ring (8) comprises a body shaped as a low profile sleeve having a first end capable of entering inside the annular pocket, and a second end axially opposite to the first end provided with an outward radial projection (81).

3. Hydraulic stop according to any one of the claims 1 or 2, comprising a retaining ring (10), disposed on the upper side in relation to the radial projection (81) of the locking ring (8), inside a channel (11) formed on the cylindrical surface of the reciprocating rod (3).

4. Shock absorber for suspension system, comprising a hydraulic stop, according to one or more of claims 1 to 3.

5. Hydraulic shock absorber for suspension system, comprising:
- a tubular shell containing viscous fluid and having closed ends;
- a tubular body (20) mounted inside and concentric to the tubular shell and having a closed end, adjacent to one of the closed ends of the tubular shell, and an opposite end provided with a central opening passing through the adjacent opposite end of the tubular shell; and
- one axially movable reciprocating rod disposed through the central opening of the tubular body (20) and provided with a sliding piston inside the tubular body and provided with an annular elastomeric stroke limiter member, the reciprocating rod moving between a retraction position, in which the piston is located adjacent to the closed end of the tubular body (20), and an extended position, in which the stroke limiter member is adjacent to the central opening;
wherein the tubular body (20) has, in an axial extension of its inner wall adjacent to the open end, a diametrical reduction (26), so as to allow, during movement of the reciprocating rod, the contact at least of the portion of the circumferential extension of the stroke limiter member with the inner wall of the tubular body (20), and wherein at least one of the portions defined by the inner wall of the tubular body (20) and stroke limiter member is provided with axial flow channels (27) for the passage of the viscous fluid during the movement of the reciprocating rod (30);
the stroke limiter member (6) comprises a retaining ring (7), a locking ring (8) and a sealing ring (9), the retaining ring (7) partially enclosing the locking ring (8) and defining, together with the locking ring (8), a groove (91) capable of receiving the one sealing ring (9) wherein the retaining ring (7) comprises an annular body having a lower annular projection (71) and an upper annular projection (72), the projections (71, 72) being diametrically opposed to one another, and wherein the lower annular projection (71) is elastic and shaped to enter into the recess (4) of the reciprocating rod (3) when the retaining ring (7) is in its assembled condition, and wherein the upper annular projection (72) is located far from the cylindrical surface of the reciprocating rod (3), thereby defining an annular pocket between the upper annular projection (72) of the retaining ring (7) and the cylindrical surface of the reciprocating rod (3).

6. Hydraulic shock absorber according to claim 5, wherein the locking ring (8) comprises a body shaped as a low profile sleeve having a first end, capable of entering inside the annular pocket, and a second end, axially opposite to the first end, provided with an outward radial projection (81).

7. Vehicle, comprising at least one shock absorber according to claim 5.

## Patentansprüche

1. Hydraulikanschlag, ein Hubbegrenzungselement (6) umfassend, das an die sich hin und her bewegende Stange (3) eines Stoßdämpfers (1) montiert ist, mit dem Zweck, das Strömen eines viskosen Fluids mittels einer mechanischen Interaktion zwischen dem Hubbegrenzungselement (6) und der zylinderförmigen Innenwand des Mantels (20) des Stoßdämpfers (1) zu steuern, wobei das Hubbegrenzungselement (6) einen Haltering (7), einen Klemmring (8) und einen Dichtungsring (9) umfasst, wobei der Haltering (7) den Klemmring (8) teilweise umschließt und zusammen mit dem Klemmring (8) eine Rille (91) definiert, die in der Lage ist, den einen Dichtungsring (9) aufzunehmen, **dadurch gekennzeichnet, dass** der Haltering (7) einen ringförmigen Körper umfasst, der einen unteren ringförmigen Vorsprung (71) und einen oberen ringförmigen Vorsprung (72) aufweist, wobei die Vorsprünge (71, 72) einander diametral gegenüberliegen und wobei der untere ringförmige Vorsprung (71) elastisch und derart geformt ist, dass er in die Vertiefung (4) der sich hin und her bewegenden Stange (3) eintritt, wenn sich der Haltering (7) in seinem eingebauten Zustand befindet, und wobei sich der obere ringförmige Vorsprung (72) fern der zylinderförmigen Oberfläche der sich hin und her bewegenden Stange (3) befindet, wodurch zwischen dem oberen ringförmigen Vorsprung (72) des Halterings (7) und der zylinderförmigen Oberfläche der sich hin und her bewegenden Stange (3) eine ringförmige Tasche gebildet ist.

2. Hydraulikanschlag nach Anspruch 1, wobei der Klemmring (8) einen Körper umfasst, der als Hülse mit geringem Profil geformt ist, die ein erstes Ende aufweist, das in der Lage ist, in das Innere der ringförmigen Tasche einzutreten, und ein zweites Ende, das dem ersten Ende axial gegenüberliegt und mit einem nach außen gerichteten radialen Vorsprung (81) versehen ist.

3. Hydraulikanschlag nach einem der Ansprüche 1 oder 2, einen Haltering (10) umfassend, der im Verhältnis zum radialen Vorsprung (81) des Klemmrings (8) an der Oberseite im Inneren eines Kanals (11) angeordnet ist, der auf der zylinderförmigen Oberfläche der sich hin und her bewegenden Stange (3) gebildet ist.

4. Stoßdämpfer für ein Aufhängungssystem, einen Hydraulikanschlag nach einem der Ansprüche 1 bis 3 umfassend.

5. Hydraulischer Stoßdämpfer für ein Aufhängungssystem, Folgendes umfassend:
- einen röhrenförmigen Mantel, der viskoses Fluid enthält und geschlossene Enden aufweist,
- einen röhrenförmigen Körper (20), der in des Innere des röhrenförmigen Mantels und konzentrisch zu diesem montiert ist und ein geschlossenes Ende aufweist, das an eines der geschlossenen Enden des röhrenförmigen Mantels angrenzt, und ein gegenüberliegendes Ende, das mit einer mittigen Öffnung versehen ist, die durch das angrenzende gegenüberliegende Ende des röhrenförmigen Mantels verläuft, und
- eine axial bewegliche, sich hin und her bewegende Stange, die durch die mittige Öffnung des röhrenförmigen Körpers (20) angeordnet und mit einem Gleitkolben im Inneren des röhrenförmigen Körpers sowie mit einem ringförmigen Elastomer-Hubbegrenzungselement versehen ist, wobei sich die sich hin und her bewegenden Stange zwischen einer eingezogenen Position, in der sich der Kolben angrenzend an das geschlossene Ende des röhrenförmigen Körpers (20) befindet, und einer ausgefahrenen Position, in der das Hubbegrenzungselement an die mittige Öffnung angrenzt, bewegt,
wobei der röhrenförmige Körper (20) in einer axialen Erstreckung seiner Innenwand angrenzend an das offene Ende eine diametrale Reduktion (26) aufweist, so dass während der Bewegung der sich hin und her bewegenden Stange der Kontakt von zumindest dem Abschnitt der umlaufenden Erstreckung des Hubbegrenzungselements mit der Innenwand des röhrenförmigen Körpers (20) ermöglicht wird, und wobei die Abschnitte, die durch die Innenwand des röhrenförmigen Körpers (20) definiert sind, und/oder das Hubbegrenzungselement mit axialen Strömungskanälen (27) für den Durchlass des viskosen Fluids während der Bewegung der sich hin und her bewegenden Stange (30) versehen ist,
wobei das Hubbegrenzungselement (6) einen Haltering (7), einen Klemmring (8) und einen Dichtungsring (9) umfasst, wobei der Haltering (7) den Klemmring (8) teilweise umschließt und zusammen mit dem Klemmring (8) eine Rille (91) definiert, die in der Lage ist, den einen Dichtungsring (9) aufzunehmen, wobei der Haltering (7) einen ringförmigen Körper umfasst, der einen unteren ringförmigen Vorsprung (71) und einen oberen ringförmigen Vorsprung (72) aufweist, wobei die Vorsprünge (71, 72) einander diametral gegenüberliegen und wobei der untere ringförmige Vorsprung (71) elastisch und derart geformt ist, dass er in die Vertiefung (4) der sich hin und her bewegenden Stange (3) eintritt, wenn sich der Haltering (7) in seinem eingebauten Zustand befindet, und wobei sich der obere ringförmige Vorsprung (72) fern der zylinderförmigen Oberfläche der sich hin und her bewegenden Stange (3) befindet, wodurch zwischen dem oberen ringförmigen Vorsprung (72) des Halterings (7) und der zylinderförmigen Oberfläche der sich hin und her bewegenden Stange (3) eine ringförmige Tasche gebildet ist.

6. Hydraulischer Stoßdämpfer nach Anspruch 5, wobei der Klemmring (8) einen Körper umfasst, der als Hülse mit geringem Profil geformt ist, die ein erstes Ende aufweist, das in der Lage ist, in das Innere der ringförmigen Tasche einzutreten, und ein zweites Ende, das dem ersten Ende axial gegenüberliegt und mit einem nach außen gerichteten radialen Vorsprung (81) versehen ist.

7. Fahrzeug, mindestens einen Stoßdämpfer nach Anspruch 5 umfassend.

## Revendications

1. Arrêt hydraulique, comprenant un membre limiteur de course (6) monté sur la tige alternative (3) d'un amortisseur (1), dont le but est de contrôler le flux d'un fluide visqueux au moyen d'une interaction mécanique entre le membre limiteur de course (6) et la paroi interne cylindrique de la coque (20) de l'amortisseur (1), dans lequel le membre limiteur de course (6) comprend une bague de retenue (7), une bague de verrouillage (8) et une bague d'étanchéité (9), la bague de retenue (7) enfermant partiellement la bague de verrouillage (8) et définissant, avec la bague de verrouillage (8), une rainure (91) pouvant recevoir la bague d'étanchéité, **caractérisé en ce que** la bague de retenue (7) comprend un corps annulaire disposant d'une saillie annulaire inférieure (71) et d'une saillie annulaire supérieure (72), les saillies (71, 72) étant diamétralement opposées l'une à l'autre, et dans lequel la saillie annulaire inférieure (71) est élastique et dispose d'une forme lui permettant d'entrer dans le creux (4) de la tige alternative (3) lorsque la bague de retenue (7) est dans sa condition assemblée, et dans lequel la saillie annulaire supérieure (72) est située loin de la surface cylindrique de la tige alternative (3), définissant ainsi une poche annulaire entre la saillie annulaire supérieure (72) de la bague de retenue (7) et la surface cylindrique de la tige alternative (3).

2. Arrêt hydraulique selon la revendication 1, dans lequel la bague de verrouillage (8) comprend un corps en forme de manchon mince disposant d'une première extrémité pouvant entrer à l'intérieur de la poche annulaire et d'une seconde extrémité axialement opposée à la première extrémité dotée d'une saillie radiale vers l'extérieur (81).

3. Arrêt hydraulique selon l'une quelconque des revendications 1 ou 2, comprenant une bague de retenue (10), disposée sur le côté supérieur par rapport à la saillie radiale (81) de la bague de verrouillage (8), dans un canal (11) formé sur la surface cylindrique de la tige alternative (3).

4. Amortisseur pour système de suspension, comprenant un arrêt hydraulique, selon l'une ou plusieurs des revendications 1 à 3.

5. Amortisseur hydraulique pour système de suspension, comprenant :
- une coque tubulaire comprenant un fluide visqueux et disposant d'extrémités fermées ;
- un corps tubulaire (20) monté à l'intérieur de la coque tubulaire, et concentrique à cette dernière, et disposant d'une extrémité fermée, adjacente à l'une des extrémités fermées de la coque tubulaire, et d'une extrémité opposée dotée d'une ouverture centrale traversant l'extrémité opposée adjacente de la coque tubulaire ; et
- une tige alternative axialement mobile disposée à travers l'ouverture centrale du corps tubulaire (20) et dotée d'une piston de coulissement à l'intérieur du corps tubulaire et dotée d'un membre limiteur de course élastomère et annulaire, la tige alternative se déplaçant entre une position de rétractation, dans laquelle le piston est situé à côté de l'extrémité fermée du corps tubulaire (20), et une position étendue, dans laquelle le membre limiteur de course est adjacent à l'ouverture centrale ;
dans lequel le corps tubulaire (20) dispose, dans une extension axiale de sa paroi interne adjacente à l'extrémité ouverte, d'une réduction diamétrale (26), afin de permettre, lors du mouvement de la tige alternative, le contact au moins de la partie de l'extension circonférentielle du membre limiteur de course avec la paroi interne du corps tubulaire (20), et dans lequel au moins l'une des parties définies par la paroi interne du corps tubulaire (20) et le membre limiteur de course est dotée de canaux d'écoulement axiaux (27) pour le passage du fluide visqueux lors du mouvement de la tige alternative (30) ;
le membre limiteur de course (6) comprend une bague de retenue (7), une bague de verrouillage (8) et une bague d'étanchéité (9), la bague de retenue (7) enfermant partiellement la bague de verrouillage (8) et définissant, avec la bague de verrouillage (8), une rainure (91) pouvant recevoir la bague d'étanchéité (9), dans lequel la bague de retenue (7) comprend un corps annulaire disposant d'une saillie annulaire inférieure (71) et d'une saillie annulaire supérieure (72), les saillies (71, 72) étant diamétralement opposées l'une à l'autre, et dans lequel la saillie annulaire inférieure (71) est élastique et dispose d'une forme lui permettant d'entrer dans le creux (4) de la tige alternative (3) lorsque la bague de retenue (7) est dans sa condition assemblée, et dans lequel la saillie annulaire supérieure (72) est située loin de la surface cylindrique de la tige alternative (3), définissant ainsi une poche annulaire entre la saillie annulaire supérieure (72) de la bague de retenue (7) et la surface cylindrique de la tige alternative (3).

6. Amortisseur hydraulique selon la revendication 5, dans lequel la bague de retenue (8) comprend un corps en forme de manchon mince disposant d'une première extrémité, pouvant entrer à l'intérieur de la poche annulaire, et une seconde extrémité, axialement opposée à la première extrémité, dotée d'une saillie radiale vers l'extérieur (81).

7. Véhicule, comprenant au moins un amortisseur selon la revendication 5.
